Europäisches Patentamt

European Patent Office

Office européen des brevets

(11) Numéro de publication: **0 551 152 B1**

# FASCICULE DE BREVET EUROPEEN

(45) Date de publication de fascicule du brevet: **16.08.95** (51) Int. Cl.⁶: **G01P 15/10**

(21) Numéro de dépôt: **93200009.4**

(22) Date de dépôt: **05.01.93**

(54) **Capteur accélérométrique miniature à lames vibrant en flexion.**

(30) Priorité: **06.01.92 FR 9200044**

(43) Date de publication de la demande:
**14.07.93 Bulletin 93/28**

(45) Mention de la délivrance du brevet:
**16.08.95 Bulletin 95/33**

(84) Etats contractants désignés:
**DE ES GB IT SE**

(56) Documents cités:
**EP-A- 0 050 307**
**EP-A- 0 414 588**
**GB-A- 2 141 286**
**US-A- 4 766 768**

(73) Titulaire: **OFFICE NATIONAL D'ETUDES ET DE RECHERCHES AEROSPATIALES(O.N.E.R.A.) Etablissement Public de l'Etat 29 avenue de la Divison Leclerc F-92320 Châtillon (FR)**

(72) Inventeur: **Janiaud, Denis, 2 avenue du Berry Bt E3 Résidence les Millepertuis F-91940 Les Ulis (FR)**
Inventeur: **Muller, Serge 8, impasse de la remmarde F-91290 Ollainville (FR)**

(74) Mandataire: **Cabinet Martinet & Lapoux BP 405 F-78055 Saint Ouentin en Yvelines Cédex (FR)**

## Description

La présente invention concerne, de manière générale, un capteur accélérométrique miniature pouvant être utilisé par exemple pour le guidage de missiles ou de satellites et dans le secteur automobile pour des applications telles que l'assistance améliorée au freinage , et la suspension active.

Plus particulièrement, l'invention a trait à un capteur comprenant une partie massive fixe, une partie massive mobile, deux lames vibrantes en matériau piézoélectrique travaillant en flexion, et deux articulations.

Ce capteur met à profit la grande sensibilité de la fréquence des deux lames vibrant en flexion, à des forces de compression ou d'extension qui s'exercent longitudinalement aux lames lorsque la partie massive mobile constituant la masse d'épreuve du capteur est soumise à une accélération transversale. La compression de l'une des lames et l'extension de l'autre lame sont converties sous formes de signaux électriques qui sont captés par deux paires d'électrodes supportées par les lames vibrantes et reliées à deux circuits oscillateurs. En sortie des circuits oscillateurs est produit un signal à fréquence différentielle dont les variations sont représentatives de celles de l'accélération.

Un tel capteur accélérométrique est décrit dans la demande de brevet français FR-A-2650895 au nom du demandeur et est représenté à la figure 1 avec des moyens de mesure de fréquence associés.

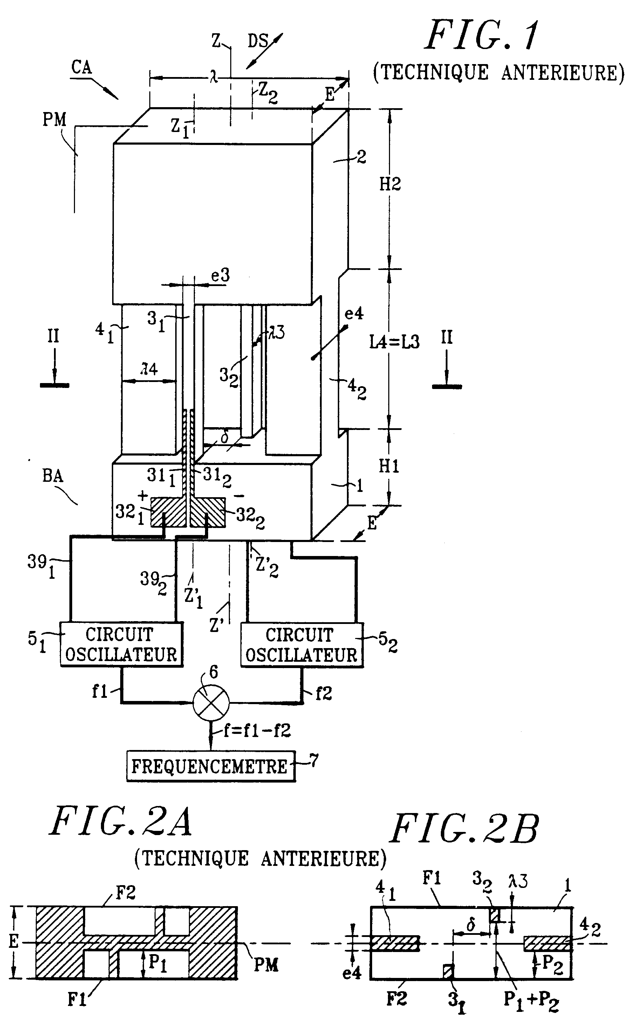

Le corps de ce capteur CA est obtenu par usinage chimique d'une plaque de cristal piézoélectrique, tel que quartz, ayant une épaisseur uniforme E, et est donc monolithique. Selon la représentation montrée à la figure 1, le corps du capteur CA a la forme générale d'un parallélépipède et comprend une partie massive fixe 1 solidaire d'une embase BA, une partie massive mobile 2, deux lames vibrantes $3_1$ et $3_2$ et deux articulations flexibles $4_1$ et $4_2$. Le corps de capteur CA présente une symétrie par rapport à l'axe longitudinal central Z'Z.

La lame $3_1$ est une poutre, à petite section rectangulaire, excitée électriquement par deux électrodes linéaires $31_1$ et $31_2$ imprimées sous la forme de deux rubans conducteurs s'étendant parallèlement et symétriquement par rapport à l'axe médian longitudinal du chant externe de la lame 31 et ce, sur sensiblement la moitié de sa longueur contigüe à la partie massive fixe 1. Sur la face correspondante de la partie fixe, les électrodes $31_1$ et $31_2$ sont terminées par deux plaques conductrices $32_1$ et $32_2$ reliées à deux premières bornes d'un circuit oscillateur $5_1$ au moyen de deux fils conducteurs $39_1$ et $39_2$. Une disposition identique d'électrodes et de plaques est prévue sur la lame $3_2$ et la face opposée de la partie fixe 1, en relation avec un second circuit oscillateur $5_2$.

Les sorties des deux circuits oscillateurs $5_1$ et $5_2$ sont reliées à un dispositif de mesure de fréquence différentielle incluant un circuit de soustraction de fréquence 6 et un fréquencemètre 7, la fréquence mesurée (f1-f2) par le fréquencemètre 7 étant représentative de l'accélération à mesurer.

Au sein d'une lame piézoélectrique, telle que la lame $3_1$, les variables électriques (champ électrique) sont couplées aux variables mécaniques (contraintes). Ce couplage piézoélectrique, qui résulte de la séparation des charges de polarisation opposées lors de la déformation de la lame $3_1$, permet d'entretenir la vibration de résonance de la lame par application d'un champ électrique alternatif produit par le circuit oscillateur $5_1$. La lame $3_1$ vibre ainsi en flexion parallèlement au plan médian PM du corps du capteur qui est perpendiculaire à la direction DS du capteur sensible à l'accélération. Selon la disposition des électrodes montrée à la figure 1, un faible couplage est seulement obtenu, ce qui affecte alors la résolution de la mesure de la fréquence différentielle (f1-f2), et donc l'accélération qui en est déduite.

S'agissant de la conception mécanique du capteur connu CA, celle-ci présente également des inconvénients particulièrement au sujet de la forme des articulations flexibles $4_1$ et $4_2$.

Il est rappelé que ces deux articulations sont constituées par deux poutres de préférence alignées dans le plan médian PM du capteur et flexibles suivant leur épaisseur e4 lorsque le capteur est soumis à une accélération suivant la direction transversale sensible DS. Le capteur CA constitue ainsi un capteur mono-axe, suivant la direction sensible DS perpendiculaire au plan PM.

Afin d'exploiter au maximum la sensibilité des lames vibrantes et d'assurer un bon maintien de la masse d'épreuve du capteur constituée par la partie massive mobile 2, la raideur en flexion des articulations $4_1$ et $4_2$ est nettement plus grande que celle des lames vibrantes $3_1$ et $3_2$. En d'autres termes, la section transversale $\lambda 4.e4$ des articulations $4_1$ et $4_2$ est nettement plus grande que celle $\lambda 3.e3$ des lames vibrantes $3_1$ et $3_2$ afin que ces lames ne subissent pratiquement que les seules forces utiles d'extension et de compression.

Comme montré à la figure 1, les lames et articulations sont sensiblement disposées en croix entre les deux parties massives 1 et 2. Toutefois, le plan médian contenant les axes médians longitudinaux $Z'_1Z_1$ et $Z'_2Z_2$ des lames $3_1$ et $3_2$ est situé dans un plan oblique au plan médian PM des parties massives. Il apparaît ainsi en section transversale du corps du capteur, un décalage δ entre les deux lames qui autorise la réalisation du corps du capteur par usinage chimique, sans cependant modifier le fonctionnement du capteur grâce à la raideur élevée des articulations.

Les figures 2A et 2B montrent deux sections rectangulaires transversales égales à celle E.λ des parties massives 1 et 2, et relatives à une plaque en matériau piézoélectrique à partir de laquelle est obtenu le corps du capteur CA. Ces deux sections correspondent à la fin de deux étapes successives d'usinage chimique pratiqué perpendiculairement aux grandes faces F1 et F2 du matériau, confondues avec celles des parties massives 1 et 2.

A la première étape (figure 2A), un usinage chimique est effectué entre les emplacements des futures articulations et des futures lames afin de creuser deux séries de deux puits ayant une profondeur P1 sur les deux faces F1, F2.

A la seconde étape (figure 2B), un usinage de profondeur P2 est effectué dans les deux séries de deux puits précités et devant les emplacements des articulations $4_1$ et $4_2$ sur chacune des faces F1 et F2 de manière à obtenir le corps du capteur définitif.

La profondeur d'usinage P2 de la seconde étape est égale à (E-e4)/2, où E et e4 sont les épaisseurs des parties massives 1 et 2 et des articulations $4_1$ et $4_2$ respectivement, et la profondeur d'usinage P1 de la première étape est telle que :

$$P1 = E - P2 - λ3,$$

où λ3 est la longueur de section transversale des lames $3_1$ et $3_2$ prise perpendiculairement aux faces F1 et F2.

Un tel usinage en deux étapes distinctes contribue au coût de fabrication relativement élevé du capteur.

Le principal objectif de l'invention est de fournir un corps de capteur accélérométrique à deux articulations dont le coût de fabrication est plus faible que celui du capteur connu précité, et en particulier qui peut être usiné chimiquement en une seule étape.

Pour atteindre ce principal objectif, les articulations du capteur comprennent chacune deux premiers tronçons sensiblement parallèles aux lames et respectivement solidaires des parties fixe et mobile, et un tronçon intermédiaire perpendiculaire aux premiers tronçons.

De préférence, les articulations sont disposées de part et d'autre des lames et sont symétriques l'une de l'autre par rapport à un axe longitudinal de symétrie du capteur qui est parallèle aux lames afin que le comportement mécanique global des articulations en marche d'escalier selon l'invention soit similaire à celui des articulations du capteur connu.

D'autres caractéristiques des articulations sont énoncées dans les revendications 3 à 8.

L'invention vise également à augmenter le couplage piézoélectrique dans un capteur accélérométrique comprenant une partie massive fixe, une partie massive mobile et deux lames en matériau piézoélectrique vibrant en flexion, chacune des lames ayant des extrémités solidaires des parties massives et un côté longitudinal qui supporte des première et seconde électrodes.

A cette fin, le capteur est caractérisé en ce qu'une partie de longueur de la lame supporte d'une part, une bande conductrice de la première électrode chevauchant un axe longitudinal sensiblement médian dudit côté, et d'autre part une bande conductrice latérale de la seconde électrode s'étendant à proximité de l'un des bords longitudinaux dudit côté.

Ainsi, grâce à ces configurations à "deux ou trois pistes" ou bandes des électrodes sur chacune des lames, ces dernières sont soumises principalement à des contraintes d'extension et de compression, et non à des contraintes de cisaillement comme dans celles du capteur connu précité. La résolution de la mesure fournie par le capteur est ainsi améliorée. Ainsi, au moins l'un des deux quarts de longueur du côté de la lame contigus aux parties massives, de préférence celui contigu à la partie fixe, peut supporter ces configurations à deux ou trois pistes.

Plus efficacement, une autre configuration de pistes analogue aux précédentes peut s'étendre sur sensiblement la moitié centrale, seule ou associée à la configuration de pistes s'étendant sur au moins l'un des deux quarts de longueur contigus aux portions massives. Dans ce dernier cas, la première électrode comprend au moins une bande latérale supportée par la partie centrale dudit côté, s'étendant à proximité de l'un des bords longitudinaux dudit côté et reliée à la bande de première électrode qui chevauche l'axe longitudinal et qui est supportée par au moins l'un des deux quarts de longueur contigus aux parties massives,

et
la seconde électrode comprend une bande conductrice supportée par la partie centrale dudit côté chevauchant l'axe longitudinal et reliée à au moins la bande latérale de seconde électrode qui est supportée par au moins l'un des deux quarts de longueur contigus aux parties massives.

Pour un certain nombre de configurations d'électrodes, et en particulier pour la configuration optimale à neuf bandes, une structure monocouche peut être insuffisante. Dans ce cas, les électrodes peuvent être réalisées dans une structure multicouche, supportée par le côté de la lame.

Des première et seconde plages de contact d'électrode peuvent être supportées par une face de la partie fixe et respectivement reliées à une bande de première électrode et à une bande de seconde électrode.

Comme dans le capteur connu, les parties massives, les lames et les articulations constituent de préférence un corps monolithique usiné dans une même plaque de matériau piézoélectrique d'épaisseur uniforme. Toutefois, afin que l'usinage soit chimique et soit effectué en une seule étape avec une même profondeur d'usinage à partir des faces de la plaque, il est prévu d'une part, que le côté longitudinal de lame supportant des électrodes soit coplanaire à l'une des faces des parties massives et d'autre part, que la largeur de section des lames prise perpendiculaire auxdits côtés longitudinaux des lames soit égale à l'épaisseur des premiers tronçons des articulations.

D'autres caractéristiques du corps du capteur sont énoncées dans les revendications 18 à 20.

D'autres avantages et caractéristiques de la présente invention apparaîtront plus clairement à la lecture de la description suivante de plusieurs réalisations préférées de l'invention en référence aux dessins annexés correspondants dans lesquels :

- la figure 1 montre une vue en perspective d'un capteur accélérométrique à lames vibrant en flexion avec des moyens de mesure de fréquence associés, selon la technique antérieure;
- les figures 2A et 2B montrent deux coupes transversales d'un capteur accélérométrique selon la technique antérieure, prises le long du plan transversal de trace II-II dans la figure 1 et correspondant respectivement à deux étapes d'usinage chimique successives;
- la figure 3 est une vue en perspective d'un capteur accélérométrique avec des moyens de mesure de fréquence associés, selon une première réalisation préférée de l'invention;
- la figure 4 montre une vue en perspective à plus grande échelle d'une paire d'électrodes disposées sur une lame du capteur accélérométrique selon la figure 3;
- la figure 5 est une vue en perspective montrant les contraintes s'exerçant sur un élément de volume d'une lame en flexion;
- les figures 6A et 6B montrent respectivement des modèles de répartition de contrainte de cisaillement et de contrainte d'extension/compression sur une lame en flexion;
- les figures 7A et 7B montrent des répartitions surfaciques d'électrodes imprimées sur une lame, pour un couplage électro-mécanique optimal, respectivement pour une configuration "deux pistes" déduite de la technique antérieure et pour une configuration "trois pistes";
- les figures 8A et 8B sont des vues de dessus respectivement de deux électrodes superposées selon la variante de la figure 7B;
- les figures 9A et 9B montrent deux coupes transversales du capteur accélérométrique selon l'invention, prises le long des plans transversaux de traces IXA-IXA et IXB-IXB dans la figure 3, pour expliquer l'optimisation de l'usinage chimique; et
- la figure 10 montre une seconde réalisation préférée d'un capteur accélérométrique selon l'invention.

Dans la description ci-après d'un capteur accélérométrique CA' selon l'invention, les parties du corps du capteur CA' et celles du corps du capteur connu CA qui sont respectivement analogues, sont désignées par les mêmes repères.

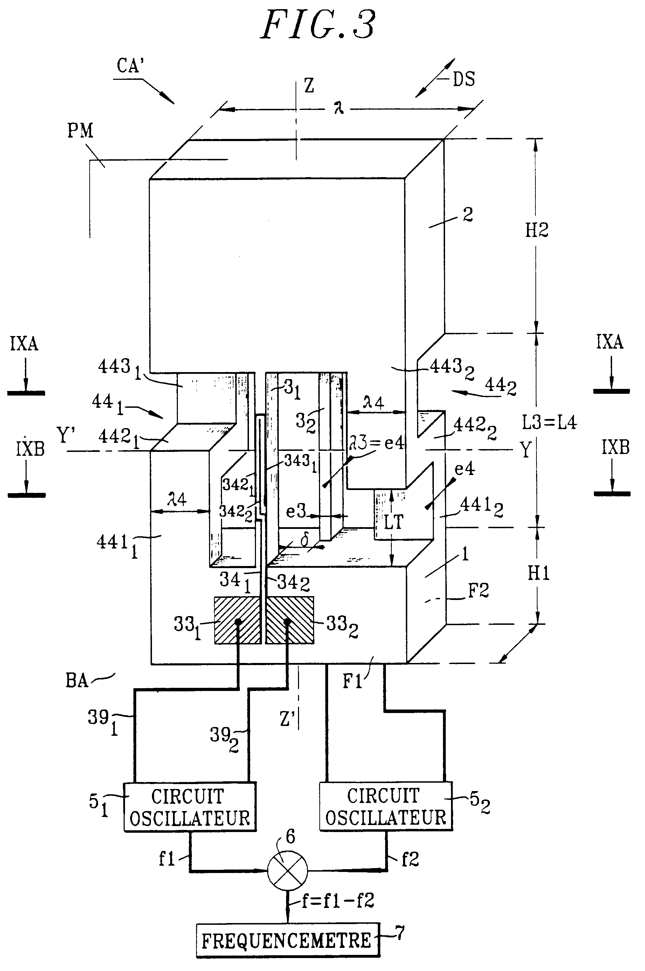

En référence à la figure 3, le capteur accélérométrique CA' comprend un corps de capteur et des moyens de mesure de fréquence associés.

Afin de montrer les perfectionnements apportés par l'invention, le capteur CA' est supposé être identique au capteur connu CA en ce qui concerne les parties massives fixe 1 et mobile 2, les lames vibrantes $3_1$ et $3_2$ et les moyens de mesure de fréquence associés. A cet égard, les diverses variantes décrites dans la demande de brevet FR-A-2650895 sont intégrées à la présente description.

Les moyens de mesure sont constitués par les deux circuits oscillateurs $5_1$ et $5_2$, le circuit de soustraction de fréquence 6 et le fréquencemètre 7, comme décrit précédemment. Chaque circuit oscillateur, par exemple le circuit $5_1$, possède deux premières bornes reliées respectivement à deux plaques de contact d'électrode $33_1$ et $33_2$ supportées par une grande face de la partie massive 1.

Le corps du capteur constitue un corps monolithique usiné dans une même plaque de matériau piézoélectrique, tel que quartz, d'épaisseur uniforme E, de largeur λ et de hauteur H1 + L3 + H2. Selon la réalisation illustrée à la figure 3, le corps du capteur CA' a la forme générale d'un parallélépipède qui s'étend verticalement suivant le sens de la hauteur matérialisé par un axe longitudinal central de symétrie Z'Z. Cet axe Z'Z est contenu dans un plan médian PM de la plaque parallèle aux faces de celles-ci. Le corps du capteur CA' comprend la partie massive fixe 1, une partie massive mobile 2, deux lames $3_1$ et $3_2$, ainsi que deux articulations $44_1$ et $44_2$ selon l'invention. La partie massive fixe 1 et la partie massive mobile 2 constituent des pavés parallélépipédiques disposés aux extrémités longitudinales du corps du capteur et ayant donc des épaisseur et largeur égales à celles E et λ du corps. La partie fixe est destinée à être solidaire de la structure d'un engin (non représenté) par l'intermédiaire d'une embase de boîtier BA et est par exemple fixée à cette dernière par collage.

Les deux lames $3_1$ et $3_2$ sont des parallélépipèdes rectangles minces solidaires des deux parties massives et ayant une section rectangulaire transversale horizontale définie par une épaisseur e3 et une largeur $\lambda$3 prises suivant la largeur $\lambda$ et l'épaisseur E du corps du capteur CA respectivement.

Les côtés des lames $3_1$ et $3_2$ tournés vers l'extérieur du corps, selon la réalisation illustrée à la Fig. 3, sont coplanaires aux grandes faces des parties massives 1 et 2 du corps du capteur CA'.

Comme dans le capteur connu CA, un décalage $\delta$ entre les deux lames $3_1$ et $3_2$ est prévu pour faciliter l'usinage chimique et particulièrement retirer de la matière entre les deux lames à partir des faces F1 et F2 des parties massives. Ce décalage des lames apparaît de part et d'autre d'un plan perpendiculaire au plan médian PM et contenant l'axe longitudinal central Z'Z.

Les deux articulations $44_1$ et $44_2$ s'étendent entre les extrémités longitudinales des parties massives 1 et 2 et de chaque côté de l'ensemble des lames $3_1$ et $3_2$. Cependant, les articulations $44_1$ et $44_2$ ne sont pas linéaires, comme les poutres $4_1$ et $4_2$ selon la technique antérieure, mais présentent un profil en marche d'escalier droit, en vue de côté perpendiculaire au plan PM. La forme et les avantages des articulations seront présentés ultérieurement.

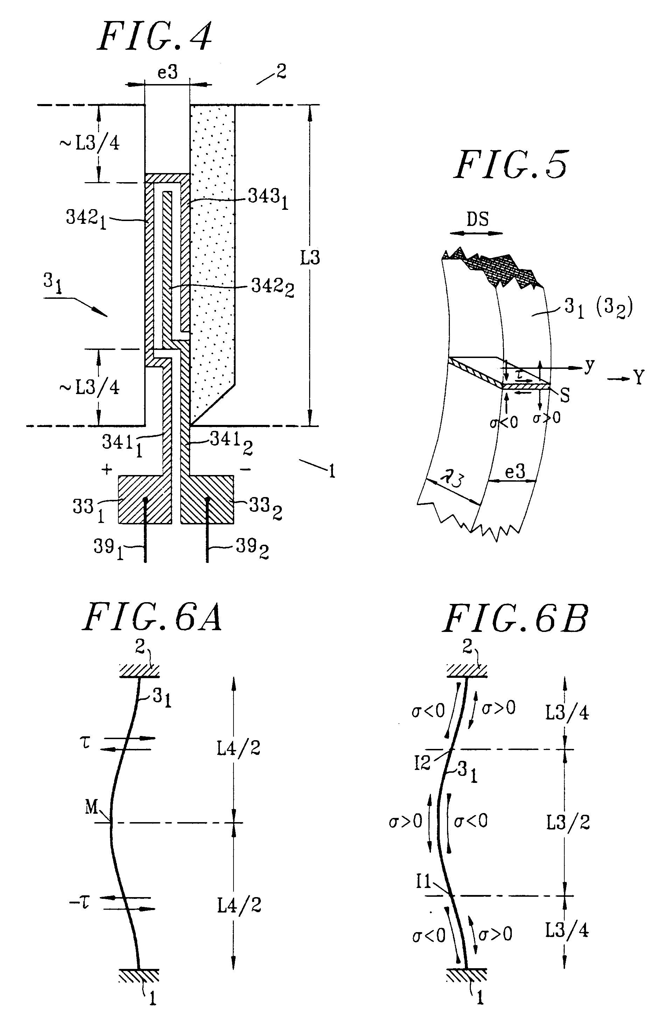

Selon la réalisation illustrée à la figure 3 et détaillée à la figure 4, la résonance de chacune des lames, par exemple la lame $3_1$, est entretenue par l'intermédiaire de deux électrodes métalliques $34_1$ et $34_2$ ayant des polarités opposées. Ces électrodes sont imprimées par photolithographie sur le côté longitudinal externe de la lame, et ne sont pas identiques.

La première électrode $34_1$ est composée de trois bandes conductrices $341_1$, $342_1$ et $343_1$ s'étendant longitudinalement et ayant respectivement des longueurs sensiblement supérieure à L3/4, et sensiblement supérieure et inférieure à L3/2, où L3 dénote la longueur des lames $3_1$ et $3_2$. La première bande $341_1$ s'étend le long de l'axe longitudinal central du côté externe de la lame et est prolongée jusqu'à la plaque $33_1$ formant une région de contact de l'électrode $34_1$ sur la partie fixe 1. Les deux autres bandes $342_1$ et $343_1$ longent les bords longitudinaux du côté externe, sensiblement sur la moitié centrale de la lame. Ainsi, les bandes $341_1$ et $342_1$ sont reliées par un double coude conducteur à angles droits opposés, et les extrémités des bandes $342_1$ et $343_1$ situées vers la partie massive mobile 2 sont reliées par un coude en U conducteur.

La seconde électrode $34_2$ comprend deux bandes conductrices $341_2$ et $342_2$ qui sont parallèles et analogues aux bandes $341_1$ et $342_1$ de la première électrode. La première bande $341_2$ s'étend longitudinalement à partir de la plaque de contact $33_2$ sur la partie massive 1, principalement le long du bord du côté externe de la lame $3_1$, dans le prolongement de la bande $343_1$. La seconde bande $342_2$ s'étend le long de l'axe longitudinal central du côté externe de la lame $3_1$, entre les bandes $342_1$ et $343_1$, sur une longueur sensiblement inférieure à L3/2, et est reliée à la bande $341_2$ par un double coude conducteur à angles droits opposés.

Les avantages de la disposition particulière des électrodes $34_1$ et $34_2$ sont maintenant présentés en référence aux figures 5, 6A et 6B.

Lorsqu'une lame $3_1$ est fléchie, une section S de cette lame est soumise à deux principales contraintes mécaniques, comme montré à la figure 5. Ce sont la contrainte de cisaillement $\tau$ et la contrainte d'extension-compression $\sigma$. Les fibres du matériau piézoélectrique sont en compression dans les parties concaves de la lame et en extension dans les parties convexes. L'intégration de ces deux contraintes dans la section de la lame S aboutit aux efforts connus dans le domaine de la flexion : l'effort tranchant $\int_S \tau.dS$ et le moment fléchissant $\int_S \sigma.y.dS$.

Suivant la longueur de lame $3_1$, la répartition de la contrainte de cisaillement $\tau$ montrée à la figure 6A est différente de la répartition de la contrainte d'extension-compression $\sigma$ montrée à la figure 6B, lorsque les extrémités de la lame $3_1$ sont encastrées dans deux parties massives 1 et 2. La contrainte de cisaillement change de signe au milieu M de la lame, tandis que la contrainte d'extension-compression le long de chacun des côtés longitudinaux de la lame change de signe aux deux sections d'inflexion I1 et I2 de la lame, situées approximativement à L3/4 des extrémités de la lame. Selon la figure 6B, les fibres localisées à gauche et à droite dans les tronçons d'extrémité de la lame $3_1$ ayant la longueur approximative L3/4 sont soumises à une compression et une extension respectivement, tandis que les fibres localisées à gauche et à droite dans le tronçon central de la lame ayant la longueur approximative L3/2 sont soumises à une extension et une compression respectivement. Lorsque le sens du champ électrique est inversé, la flexion de lame est située à droite dans les figures 6A et 6B. La lame oscille ainsi de part et d'autre de la verticale lorsque le champ électrique est alternatif, tel que celui généré par le circuit oscillant associé $5_1$ via les deux électrodes.

Le rôle des électrodes d'excitation piézoélectrique est de créer des composantes du champ électrique dans la lame qui induisent l'une ou l'autre

des deux contraintes $\tau$ et $\sigma$.

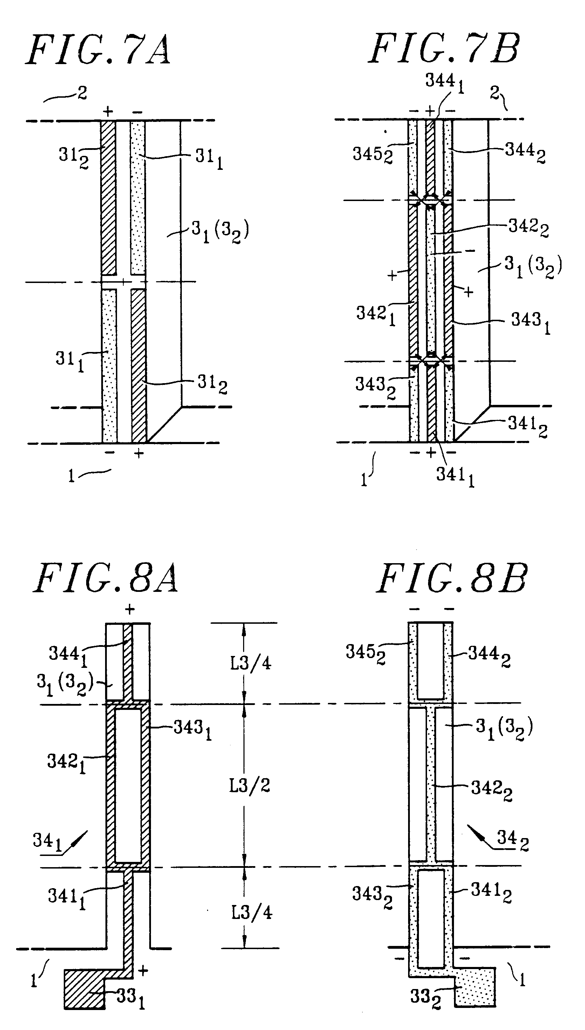

Dans le capteur connu CA montré à la figure 1, les deux électrodes $31_1$ et $31_2$ s'étendent approximativement au plus sur la moitié L3/2 du chant longitudinal externe de la lame, ou selon une variante montrée à la figure 7A, deux paires d'électrodes parallèles $31_1$ et $31_2$ s'étendent respectivement sur les deux moitiés de la lame approximativement. Dans cette configuration à "deux pistes", le champ électrique entre les électrodes d'une moitié de longueur de la lame génère de manière prépondérante la contrainte de cisaillement. Dans la figure 7A, les électrodes sont disposées afin que les champs électriques soient opposés dans les deux moitiés de longueur de la lame et génèrent des contraintes de cisaillement opposées, comme montré à la figure 6A.

Dans le capteur CA' selon l'invention, montré à la figure 3, la zone active d'excitation est située principalement dans la moitié centrale de la lame où la bande centrale $342_2$ appartenant à la seconde électrode $34_2$ est encadrée longitudinalement par les deux bandes $342_1$ et $343_1$ de la première électrode $34_1$ ayant une même polarité qui est opposée à celle de la bande $342_2$. Dans ces conditions, cette configuration à "trois pistes" crée deux composantes opposées de champ électrique suivant l'épaisseur e3 de la lame qui induisent respectivement des contraintes d'extension et de compression, comme montré à la figure 6B. Pour que les bandes $341_1$ et $341_2$ reliant cette configuration à trois pistes aux plaques de contact $33_1$ et $33_2$ génèrent également un champ électrique correspondant aux sens des contraintes d'extension et de compression dans le tronçon d'extrémité L3/4 jouxtant la partie fixe 1 selon la figure 6B, les bandes $341_1$ et $341_2$ sont respectivement décalées sensiblement de e3/2 par rapport aux bandes $342_1$ et $342_2$.

Afin d'accroître l'efficacité des électrodes, la configuration à trois pistes est réalisée sur toute la longueur de la lame $3_1$ selon une autre variante montrée à la figure 7B. Dans cette variante sont retrouvées les cinq bandes précitées des électrodes et sont ajoutées quatre autres bandes conductrices. Une quatrième bande de première électrode $344_1$ est située le long de l'axe longitudinal du quart de la lame contigu à la partie mobile 2. Une troisième bande de seconde électrode $343_2$ est située dans le quart de la lame contigu à la partie fixe 1 et est symétrique de la bande $341_2$. Des quatrième et cinquième bandes de seconde électrode $344_2$ et $345_2$ sont situées symétriquement le long des bords du quart de la lame contigu à la partie mobile 2.

L'implantation de ces neuf bandes conductrices est réalisée en structure multicouche, c'est-à-dire par des dépôts classiques de matière conductrice et de matière isolante de manière à superposer des premiers ponts conducteurs de liaison entre les extrémités des bandes $341_1$ à $344_1$ de la première électrode $34_1$ et des seconds ponts conducteurs de liaison entre les extrémités des bandes $341_2$ à $345_2$ de la seconde électrode $34_2$. Les premiers et seconds ponts de liaison se croisent sensiblement aux quarts de longueur L3/4 de la lame à partir des parties massives 1 et 2. Ainsi, la première électrode $34_1$ est située dans un premier plan d'implantation, comme montré à la figure 8A, et est superposée à la seconde électrode dans un second plan d'implantation montré à la figure 8B, à travers une couche isolante. Dans la figure 7B, les ponts conducteurs sont schématisés par des segments doublement fléchés.

Toutefois, il est à noter que cette structure multicouche des électrodes est plus onéreuse que la structure monocouche montrée à la figure 4.

Les plages de contact d'électrode $33_1$ et $33_2$ sur la face F1 de la partie fixe sont respectivement reliées à une extrémité de la bande $341_1$ de la première électrode $34_1$ et à des extrémités des bandes $341_2$ et $343_2$ de la seconde électrode $34_2$, ces trois bandes étant situées principalement sur le quart d'extrémité de longueur de la lame $3_1$ contigu à la partie fixe 1.

L'exemple concerne ainsi, d'une manière plus générale, une configuration de deux électrodes "à deux ou trois bandes conductrices", qui s'étendent sensiblement sur un quart de la longueur d'un côté d'une lame, telles que les bandes $341_1$, $341_2$ et/ou $343_2$, ou de préférence qui s'étendent sensiblement sur la moitié centrale de la longueur d'un côté d'une lame, telles que les bandes $342_2$, $342_1$ et/ou $343_2$.

L'expérience a montré que la configuration à trois pistes, du type de celles illustrées aux figures 4 et 7B, procure un couplage piézoélectrique entre le champ électrique et les contraintes mécaniques supérieur à celui de la configuration connue à deux pistes. Cela se traduit par un accroissement notable de la résolution et des performances du capteur.

S'agissant de la réalisation de la configuration monocouche à trois pistes, celle-ci n'apporte aucune difficulté supplémentaire comparativement à la configuration à deux pistes, ces deux configurations étant obtenues par des procédés photolithographiques classiques mis en oeuvre notamment dans l'industrie de l'horlogerie, compte tenu des faibles dimensions des lames et notamment de leur épaisseur e3 de l'ordre de 50 $\mu$m.

En se référant à nouveau à la figure 3, l'une $44_1$ des articulations est décrite en détail ci-après, puisque les articulations $44_1$ et $44_2$ sont symétriques par rapport à l'axe central longitudinal de symétrie Z'Z du capteur CA'.

L'articulation $44_1$ est de préférence symétrique par rapport à l'axe Y'Y, contenu dans le plan PM et perpendiculaire à l'axe Z'Z. L'articulation en marche d'escalier $44_1$ comporte deux tronçons linéaires $441_1$ et $443_1$ formant contre-marche et un petit tronçon linéaire intermédiaire $442_1$ formant marche. Les longueurs LT des tronçons $441_1$ et $443_1$ sont de préférence égales entr'elles et supérieures à la longueur $E-2.e4$ du tronçon intermédiaire $442_1$. Les tronçons $441_1$ et $443_1$ ont des chants de largeur $e4$ sensiblement parallèles aux lames $3_1$ et $3_2$. Ils se dressent perpendiculairement aux petits côtés en regard des parties massives 1 et 2 et sont symétriques par rapport à l'axe Y'Y. Le petit tronçon $442_1$ s'étend perpendiculairement aux lames $3_1$ et $3_2$ et a l'axe Y'Y comme axe transversal. La section de chaque tronçon est constante et rectangulaire. La largeur d'articulation $\lambda4$ est prise suivant la longueur $\lambda$ des parties massives, et est inférieure typiquement à $\lambda/3$. De préférence, les sections $e4.\lambda4$ des tronçons $441_1$ et $443_1$ sont égales entr'elles et inférieures à la section $(L4-2.LT).\lambda4$ du tronçon intermédiaire $442_1$. L'épaisseur $e4$ des tronçons $441_1$ et $443_1$ est prise suivant l'épaisseur $E$ des parties massives et est typiquement de l'ordre de $E/3$ à $E/10$. Comme selon la technique antérieure, les sections des tronçons des articulations $44_1$ et $44_2$ sont nettement plus grandes que celles $e3.\lambda3$ des lames vibrantes $3_1$ et $3_2$. Ainsi, la longueur LT des tronçons $441_1$ et $443_1$ est inférieure à $(L3-e4)/2$, en supposant $L3 = L4$.

Comme cela apparaît dans la figure 3, les tronçons $441_1$ et $443_1$ se dressent normalement sur deux coins voisins des faces en regard des parties massives 1 et 2. Les tronçons $441_1$ et $443_1$ de l'articulation $44_1$ et les tronçons correspondants $441_2$ et $443_2$ de l'articulation $44_2$ sont diagonalement opposés entre les parties massives.

Le profil en marche d'escalier des articulations autorise avantageusement l'usinage chimique en une seule étape pour fabriquer le corps du capteur CA'. Toutefois, afin qu'une seule profondeur de gravure $P = E-\lambda3$ soit nécessaire et suffisante, la largeur de section $\lambda3$ des lames vibrantes $3_1$ et $3_2$ est égale à l'épaisseur de section $e4$ des articulations $44_1$ et $44_2$.

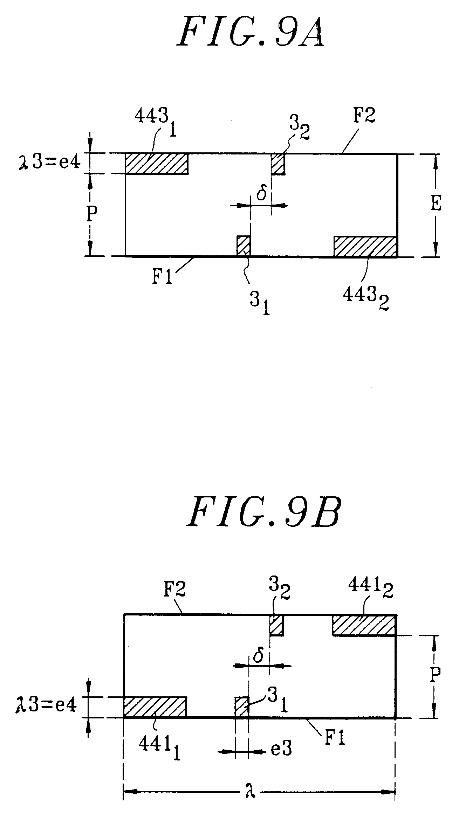

Comme montré en coupe suivant deux plans transversaux horizontaux de part et d'autre de l'axe transversal Y'Y central au capteur CA', aux figures 9A et 9B, l'usinage chimique de profondeur P creuse notamment deux "puits" sur une largeur $(-(\lambda-\delta)/2)-e3$ respectivement au-dessus des tronçons de marche $442_1$ et $442_2$ (Fig. 9A), et deux autres "puits" sur une largeur $(\lambda+\delta)/2$ respectivement au dessous des tronçons $442_1$ et $442_2$ (figure 9B) de manière à atteindre directement les faces des tronçons de contre-marche $443_1$ et $443_2$, $441_1$ et $441_2$, les gravures des puits de chacune des paires précitées étant réalisées à partir des faces F1 et F2 respectivement. Simultanément, au cours de gravure les contours des lames $3_1$ et $3_2$ sont dégagées grâce au décalage $\delta$ de celles-ci et en imposant une égalité $\lambda3 = e4$ entre la largeur des lames et l'épaisseur des tronçons de contre-marche.

Du point de vue de la fonction mécanique de l'ensemble des articulations $44_1$ et $44_2$ selon l'invention, celle-ci ne diffère pratiquement pas des articulations $4_1$ et $4_2$ du capteur connu CA.

En effet, les "encastrements" aux extrémités des tronçons verticaux des articulations $44_1$ et $44_2$ sont solidaires de la partie fixe 1 d'une part, et de la masse d'épreuve 2 d'autre part. Ces parties 1 et 2 étant massives, elles établissent un lien rigide entre les encastrements des articulations $44_1$ et $44_2$ sur chacune de ces parties.

Le comportement mécanique de l'articulation globale $44_1 + 44_2$ du capteur CA' est ainsi relativement proche de celui des poutres linéaires d'articulation $4_1$ et $4_2$ situées dans le plan médian PM du corps du capteur CA selon la technique antérieure, grâce aux dispositions inverses des articulations en marche d'escalier $44_1$ et $44_2$.

Cela ne serait pas le cas si les articulations en marche d'escalier étaient disposées dans le même sens, c'est-à-dire si l'articulation $44_2$ se déduisait de l'articulation $44_1$ par une translation parallèle au plan PM. En effet, il en découlerait des inconvénients lorsque le capteur est soumis à des accélérations perpendiculaires à la direction sensible DS, et en particulier à une accélération parallèle à l'axe Z'Z : la partie massive mobile 2 subirait une rotation dont l'axe serait voisin de l'axe Y'Y l'amenant dans l'un des demi-espaces situés de part et d'autre du plan PM. Ceci provoquerait une variation fréquentielle indésirable du signal de sortie délivré par le capteur, puisque celui-ci est un capteur monoaxe, c'est-à-dire ne doit être sensible qu'à la seule composante de l'accélération parallèle à DS.

Pour le capteur CA' suivant l'invention, cet inconvénient n'est pas à craindre : lorsqu'une accélération est appliquée parallèlement à l'axe Z'Z, le centre de gravité de la partie massive 2 faisant office de masse d'épreuve reste situé sur l'axe Z'Z, et donc a fortiori dans le plan PM, ce qui ne provoque pas de variation du signal de sortie. Ceci est dû au fait que les articulations $44_1$ et $44_2$ se déduisent l'une de l'autre par une rotation de 180° autour de l'axe Z'Z. Autrement dit, elles sont symétriques l'une de l'autre par rapport à l'axe Z'Z.

Ainsi, la fonction mécanique globale des articulations $44_1$ et $44_2$ est semblable à celle des articulations $4_1$ et $4_2$ selon la technique antérieure.

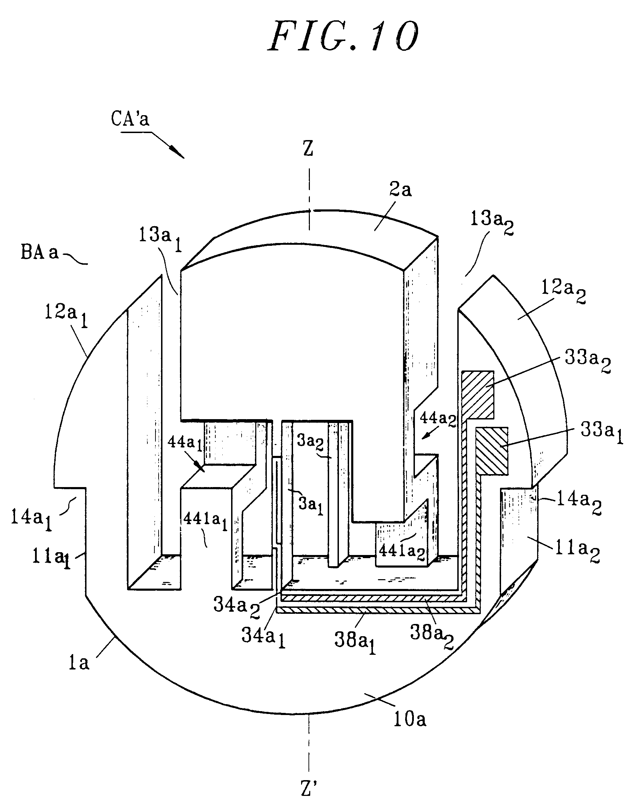

Selon une seconde réalisation montrée à la figure 10, un capteur CA'a comporte une partie fixe 1a, une partie mobile 2a, deux lames $3a_1$ et $3a_2$ et deux articulations en marche d'escalier $44a_1$ et

$44a_2$, ainsi que des configurations d'électrodes $34a_1$ et $34a_2$ à trois pistes, similaires à celles du capteur CA'.

Comparativement au capteur CA' de la figure 3, le capteur CA'a en diffère principalement par la forme discoïde du corps de capteur et par la forme en U de la partie fixe 1a.

Cette partie fixe comporte un segment discoïde de base 10a qui forme la partie fixe proprement dite comme la partie 1 dans le capteur CA', deux portions minces $11a_1$ et $11a_2$ dressées verticalement aux extrémités du segment 10a et situées à la hauteur des tronçons de contre-marche inférieurs $441a_1$ et $441a_2$, et deux branches $12a_1$ et $12a_2$ en forme de demi-segments discoïdes prolongeant les portions minces et s'étendant sensiblement jusqu'à l'extrémité de la partie massive mobile 2a. Ainsi, les ensembles de portion mince et branche $11a_1$-$12a_1$ et $11a_2$-$12a_2$ longent les articulations $44a_1$ et $44a_2$ et la partie mobile 2a par l'intermédiaire de fentes longitudinales étroites $13a_1$ et $13a_2$, et des encoches $14a_1$ et $14a_2$ sont ménagées sur le pourtour circulaire du capteur, au niveau des portions minces et sous les branches.

Les branches semi-discoïdes $12a_1$ et $12a_2$ sont fixées, par exemple par collage, sur l'embase BAa d'un boîtier cylindrique de faible encombrement, par exemple de O,5 cm$^3$.

Ainsi, les portions minces $11a_1$ et $11a_2$, intermédiaires entre le segment de base et les branches, réalisent un découplage mécanique entre la partie centrale active du capteur CA'a et les branches fixées sur l'embase, ce qui réduit l'influence parasite des contraintes mécaniques du boîtier.

Dans le même esprit, des connexions électriques entre les électrodes $34a_1$ et $34a_2$ et des traversées étanches de l'embase du boîtier sont réalisées au niveau des branches fixées $12a_1$ et $12a_2$, par soudure sur des plages de contact métalliques de forme rectangulaire. Comme illustré à la figure 10, les plages métalliques $33a_1$ et $33a_2$ relatives à l'une $3a_1$ des lames vibrantes sont situées sur l'une $12a_2$ des branches et sont reliées aux électrodes correspondantes $34a_1$ et $34a_2$ par deux rubans métalliques $38a_1$ et $38a_2$ supportés par la face visible du segment de base 10a et de la portion mince $11a_2$. Les plages métalliques relatives à l'autre lame $3a_2$ ne sont pas visibles dans la figure 10 et sont supportées de préférence par la face arrière de l'autre branche $12a_1$ de manière à conserver la symétrie par rapport à l'axe médian Z'Z, y compris relativement aux électrodes et aux rubans de liaison électrique.

Les électrodes, les rubans de liaison et les plages de contact peuvent être simultanément obtenus par gravure d'une couche métallique adhérente au matériau piézoélectrique à partir de procédés photolithographiques classiques.

**Revendications**

1. Capteur accélérométrique comprenant une partie massive fixe (1), une partie massive mobile (2) et deux lames en matériau piézoélectrique vibrant en flexion ($3_1$; $3_2$), chacune ($3_1$) des lames ayant des extrémités solidaires des parties massives et un côté longitudinal qui supporte des première et seconde électrodes ($34_1$; $34_2$), caractérisé par deux articulations ($44_1$, $44_2$) comprenant chacune deux premiers tronçons ($441_1$, $443_1$; $441_2$, $443_2$) sensiblement parallèles aux lames ($3_1$, $3_2$) et respectivement solidaires des parties fixe et mobile (1, 2), et un tronçon intermédiaire ($442_1$; $442_2$) perpendiculaire aux premiers tronçons.

2. Capteur accélérométrique conforme à la revendication 1, caractérisé en ce que les articulations ($44_1$, $44_2$) sont disposées de part et d'autre des lames ($3_1$, $3_2$) et sont symétriques l'une de l'autre par rapport à un axe longitudinal de symétrie (Z'Z) du capteur qui est parallèle aux lames.

3. Capteur accélérométrique conforme à la revendication 1 ou 2, caractérisé par des longueurs (LT) des premiers tronçons ($441_1$, $443_1$; $441_2$, $443_2$) qui sont égales entr'elles et supérieures à la longueur du tronçon intermédiaire ($442_1$; $442_2$).

4. Capteur accélérométrique conforme à l'une quelconque des revendications 1 à 3, caractérisé par des sections (e4.l4) des premiers tronçons ($441_1$, $443_1$; $441_2$, $443_2$) qui sont égales entr'elles et inférieures à la section ((L4-2.LT).λ4) du tronçon intermédiaire ($442_1$; $442_2$).

5. Capteur accélérométrique conforme à l'une quelconque des revendications 1 à 4, caractérisé par des sections des tronçons ($441_1$, $442_1$, $443_1$; $441_2$, $442_2$, $443_2$) des articulations ($44_1$; $44_2$) supérieures à la section (e3.l3) des lames ($3_1$; $3_2$).

6. Capteur accélérométrique conforme à l'une quelconque des revendications 1 à 5, caractérisé par des faces des deux premiers tronçons de chacune des articulations ($441_1$, $443_1$; $441_2$, $443_2$) respectivement coplanaires à des faces opposées des parties massives fixe et mobile (1, 2).

7. Capteur accélérométrique conforme à l'une quelconque des revendications 1 à 6, caractérisé en ce que ledit côté longitudinal de lame

supportant les électrodes ($34_1$, $34_2$) est coplanaire à l'une (F1) des faces de la partie fixe (1).

8. Capteur accélérométrique conforme à la revendication 7, caractérisé par une largeur de section (l3) des lames ($3_1$, $3_2$) prise perpendiculaire auxdits côtés longitudinaux des lames, égale à l'épaisseur (e4) des premiers tronçons ($441_1$, $443_1$; $441_2$, $443_2$) des articulations.

9. Capteur accélérométrique conforme à l'une quelconque des revendications 1 à 8, caractérisé en ce qu'une partie de longueur de la lame ($3_1$) supporte d'une part une bande conductrice ($341_1$; $342_2$; $344_1$) de la première électrode ($34_1$; $34_2$) chevauchant un axe longitudinal sensiblement médian dudit côté, et d'autre part une bande conductrice latérale ($341_2$ ou $343_2$; $343_1$ ou $342_1$; $344_2$ ou $345_2$) de la seconde électrode ($34_2$; $34_1$) s'étendant à proximité de l'un des bords longitudinaux dudit côté.

10. Capteur accélérométrique conforme à la revendication 9, caractérisé en ce que la partie de longueur de la lame ($3_1$) supporte une deuxième bande conductrice latérale ($343_2$ ou $341_2$; $342_1$ ou $343_1$; $345_2$ ou $344_2$) s'étendant symétriquement à la première bande latérale par rapport à l'axe longitudinal médian dudit côté et appartenant à la seconde électrode.

11. Capteur accélérométrique conforme à la revendication 9 ou 10, caractérisé en ce que la partie de longueur de la lame ($3_1$) comprend au moins l'un des deux quarts (L3/4) de longueur contigus aux parties massives (1,2).

12. Capteur accélérométrique conforme à la revendication 9 ou 10, caractérisé en ce que la partie de longueur de la lame ($3_1$) comprend sensiblement la moitié centrale (L3/2).

13. Capteur accélérométrique conforme à la revendication 11, caractérisé en ce que la première électrode ($34_1$) comprend au moins une bande latérale ($342_1$, $343_1$) supportée par la partie centrale dudit côté, s'étendant à proximité de l'un des bords longitudinaux dudit côté et reliée à la bande de première électrode ($341_1$, $344_1$) qui chevauche l'axe longitudinal et qui est supportée par au moins l'un des deux quarts de longueur contigus aux parties massives, et la seconde électrode comprend une bande conductrice ($342_2$) supportée par la partie centrale dudit côté chevauchant l'axe longitudinal et reliée à au moins la bande latérale

de seconde électrode ($341_2$ ou $343_2$; $344_2$ ou $345_2$) qui est supportée par au moins l'un des deux quarts de longueur contigus aux parties massives.

14. Capteur accélérométrique conforme à l'une quelconque des revendications 9 à 13, caractérisé en ce que les électrodes ($34_1$, $34_2$) sont sur des couches superposées d'une structure multicouche supportée par ledit côté de la lame.

15. Capteur accélérométrique conforme à l'une quelconque des revendications 9 à 14, caractérisé en ce que chaque électrode a une bande conductrice reliée à une plage de contact d'électrodes ($33_1$, $33_2$) supportée par une face (F1) de la partie fixe (1).

16. Capteur accélérométrique conforme à l'une quelconque des revendications 1 à 15, caractérisé en ce que les parties massives (1, 2), les lames ($3_1$, $3_2$) et les articulations ($44_1$, $44_2$) constituent un corps monolithique usiné dans une même plaque de matériau piézoélectrique d'épaisseur uniforme (E).

17. Capteur accélérométrique conforme aux revendications 8 et 16, caractérisé en ce que l'usinage du corps est chimique et est effectué en une seule étape avec une même profondeur d'usinage (P) à partir des faces (F1, F2) de ladite plaque.

18. Capteur accélérométrique conforme à l'une quelconque des revendications 1 à 17, caractérisé en ce que la partie fixe (1a) comprend deux ensembles composés chacun d'une branche ($12a_1$; $12a_2$) pour fixer le capteur sur une embase (BAa), et d'une portion mince ($11a_1$; $11a_2$) reliant ladite branche à une base (10a) de la partie fixe qui est solidaire des lames ($3a_1$, $3a_2$) et des articulations ($44a_1$, $44a_2$) pour découpler mécaniquement la branche et la base.

19. Capteur accélérométrique conforme à la revendication 18, caractérisé en ce que les ensembles à branche et portion mince ($12a_1$, $11a_1$; $12a_2$, $11a_2$) sont séparés des articulations ($44a_1$; $44a_2$) et de la partie mobile (2a) par des fentes longitudinales ($13a_1$, $13a_2$).

20. Capteur accélérométrique conforme à la revendication 18 ou 19, caractérisé par des paires de plages de contact ($33a_1$, $33a_2$) disposées respectivement sur les faces opposées des branches ($12a_1$, $12a_2$) et reliées aux paires

d'électrodes ($34a_1$, $34a_2$) des lames ($3a_1$, $3a_2$) par des paires de rubans conducteurs ($38a_1$, $38a_2$) supportées par les portions minces ($11a_1$; $11a_2$) et la base ($10a$).

**Claims**

1. An acceleration sensor comprising a fixed solid part (1), a movable solid part (2) and two piezoelectric wafers vibrating in flexion ($3_1$; $3_2$), each ($3_1$) of the wafers having ends rigidly secured to the solid parts and a longitudinal side which supports first and second electrodes ($34_1$; $34_2$), characterised by two articulations ($44_1$, $44_2$) each comprising two first parts ($441_1$, $443_1$; $441_2$, $443_2$) which are substantially parallel to the wafers ($3_1$, $3_2$) and rigidly secured to the fixed part (1) and movable part (2) respectively, and an intermediate part ($442_1$; $442_2$) perpendicular to the first parts.

2. An acceleration sensor according to claim 1, characterised in that the articulations ($44_1$, $44_2$) are arranged on either side of the wafers ($3_1$, $3_2$) and are symmetrical of one another in relation to a longitudinal axis (Z'Z) of symmetry of the sensor, such axis being parallel to the wafers.

3. An acceleration sensor according to claim 1 or 2, characterised in that the lengths (LT) of the first parts ($441_1$, $443_1$; $441_2$, $443_2$) are equal to one another and greater than the length of the intermediate part ($442_1$; $442_2$).

4. An acceleration sensor according to any of claims 1 to 3, characterised in that cross-sections (e4.14) of the first parts ($441_1$, $443_1$; $441_2$, $443_2$) are equal to one another and less than the cross-section ((L4-2.LT). 4) of the intermediate part ($442_1$; $442_2$).

5. An acceleration sensor according to any of claims 1 to 4, characterised in that cross-sections of the parts ($441_1$, $442_1$, $443_1$; $441_2$, $442_2$, $443_2$) of the articulations ($44_1$; $44_2$) are greater than the cross-section (e3.13) of the wafers ($3_1$; $3_2$).

6. An acceleration sensor according to any of claims 1 to 5, characterised in that the surfaces of the first two parts of each of the articulations ($441_1$, $443_1$; $441_2$, $443_2$) are respectively coplanar with opposite surfaces of the fixed and movable solid parts (1, 2).

7. An acceleration sensor according to any one of claims 1 to 6, characterised in that that longitudinal side of the wafer which supports the electrodes ($34_1$, $34_2$) is coplanar with one (F1) of the surfaces of the fixed part (1).

8. An acceleration sensor according to claim 7, characterised in that the cross-sectional width (13) of the wafers ($3_1$, $3_2$) taken perpendicular to the said longitudinal sides of the wafers is equal to the thickness (e4) of the first parts ($441_1$, $443_1$; $441_2$, $443_2$) of the articulations.

9. An acceleration sensor according to any of claims 1 to 8, characterised in that over a part of its length the wafer ($3_1$) supports: a conductive strip ($341_1$; $342_2$; $344_1$) of the first electrode ($34_1$; $34_2$) straddling a substantially median longitudinal axis of said side; and a lateral conductive strip ($341_2$ or $343_2$; $343_1$ or $342_1$; $344_2$ or $345_2$) of the second electrode ($34_2$; $34_1$) extending close to one of the longitudinal edges of such side.

10. An acceleration sensor according to claim 9, characterised in that the wafer ($3_1$) supports over part of its length a second lateral conductive strip ($343_2$ or $341_2$; $342_1$ or $343_1$; $345_2$ or $344_2$) which extends symmetrically of the first lateral strip relatively to the median longitudinal axis of such side and associated with the second electrode.

11. An acceleration sensor according to claim 9 or 10, characterised in that the length part of the wafer ($3_1$) comprises at least one of the two quarter-lengths (L3/4) contiguous with the solid parts (1, 2).

12. An acceleration sensor according to claim 9 or 10, characterised in that the length part of the wafer ($3_1$) comprises substantially the central half (L3/2).

13. An acceleration sensor according to claim 11, characterised in that the first electrode ($34_1$) comprises at least one lateral strip ($342_1$, $343_1$) which is supported by the central part of said side, extends close to one of the longitudinal edges thereof and is connected to the first-electrode strip ($341_1$, $344_1$) straddling the longitudinal axis and which is supported by at least one of the two quarter-lengths contiguous with the solid parts, and the second electrode comprises a conductive strip ($342_2$) supported by the central part of said side and straddling the longitudinal axis and connected to at least the second-electrode lateral strip ($341_2$ or

$343_2$; $344_2$ or $345_2$) which is supported by at least one of the two quarter-lengths contiguous with the solid parts.

14. An acceleration sensor according to any of claims 9 to 13, characterised in that the electrodes ($34_1$, $34_2$) are on superposed layers of a laminated structure supported by the said wafer side.

15. An acceleration sensor according to any of claims 9 to 14, characterised in that each electrode has a conductive strip connected to an electrode contact zone ($33_1$, $33_2$) supported by a surface (F1) of the fixed part (1).

16. An acceleration sensor according to any of claims 1 to 15, characterised in that the solid parts (1, 2), the wafers ($3_1$, $3_2$) and the articulations ($44_1$, $44_2$) form a monolithic body machined in a single sheet of piezoelectric material of uniform thickness (E).

17. An acceleration sensor according to claims 8 and 16, characterised in that the machining of the body is chemical and is performed in a single step at a single machining depth (P) from the surfaces (F1, F2) of the piezoelectric sheet.

18. An acceleration sensor according to any of claims 1 to 17, characterised in that the fixed part (1a) comprises two systems each embodied by a branch ($12a_1$; $12a_2$) for fixing the sensor to a mount (BAa) and a thin portion ($11a_1$; $11a_2$) connecting the branch to a base (10a) of the fixed part which is rigidly secured to the wafers ($3a_1$, $3a_2$) and articulations ($44a_1$, $44a_2$) in order to decouple the branch and the base mechanically.

19. An acceleration sensor according to claim 18, characterised in that the branch-and-thin-portion systems ($12a_1$, $11a_1$; $12a_2$, $11a_2$) are separated from the articulations ($44a_1$; $44a_2$) and moving part (2a) by longitudinal slots ($13a_1$, $13a_2$).

20. An acceleration sensor according to claim 18 or 19, characterised by contact zone pairs ($33a_1$, $33a_2$) disposed on the respective opposite surfaces of the branches ($12a_1$, $12a_2$) and connected to the electrode pairs ($34a_1$, $34a_2$) of the wafers ($3a_1$, $3a_2$) by pairs of conductive strips ($38a_1$, $38a_2$) supported by the thin portions ($11a_1$; $11a_2$) and the base (10a).

**Patentansprüche**

1. Beschleunigungsmeßfühler, aufweisend einen festen Massivteil (1), einen beweglichen Massivteil (2) und zwei Biegeschwingerplattenteile ($3_1$; $3_2$) aus piezoelektrischem Material, wobei jede ($3_1$) der Platten fest mit den Massivteilen verbundene Enden und eine Längsseite aufweisen, die erste und zweite Elektroden ($34_1$; $34_2$) trägt, **gekennzeichnet** durch zwei Gelenke ($44_1$, $44_2$), die jeweils zwei erste Abschnitte ($441_1$, $443_1$; $441_2$, $443_2$), die im wesentlichen zu den Platten ($3_1$, $3_2$) parallel und entsprechend mit den festen und beweglichen Teilen (1, 2) fest verbunden sind, und einen Zwischenabschnitt ($442_1$, $442_2$) aufweisen, der zu den ersten Abschnitten senkrecht ist.

2. Beschleunigungsmeßfühler nach Anspruch 1, dadurch **gekennzeichnet,** daß die Gelenke ($44_1$, $44_2$) auf beiden Seiten der Platten ($3_1$, $3_2$) vorgesehen sind und zueinander in bezug auf eine Symmetrielängsachse (Z'Z) des Meßfühlers symmetrisch sind, die zu den Platten parallel ist.

3. Beschleunigungsmeßfühler nach Anspruch 1 oder 2, **gekennzeichnet** durch Längen (LT) der ersten Abschnitte ($441_1$, $443_1$; $441_2$, $443_2$), die untereinander gleich und größer als die Länge des Zwischenabschnittes ($442_1$; $442_2$) sind.

4. Beschleunigungsmeßfühler nach einem beliebigen der Ansprüche 1 bis 3, **gekennzeichnet** durch Querschnitte (e4.l4) der ersten Abschnitte ($441_1$, $443_1$; $441_2$, $443_2$), die untereinander gleich und kleiner als der Querschnitt ((L4-2.LT).λ4) des Zwischenabschnittes ($442_1$; $442_2$) sind.

5. Beschleunigungsmeßfühler nach einem beliebigen der Ansprüche 1 bis 4, **gekennzeichnet** durch Querschnitte der Abschnitte ($441_1$, $442_1$, $443_1$; $441_2$, $442_2$, $443_2$) der Gelenke ($44_1$; $44_2$) größer als der Querschnitt (e3.l3) der Platten ($3_1$; $3_2$).

6. Beschleunigungsmeßfühler nach einem beliebigen der Ansprüche 1 bis 5, **gekennzeichnet** durch Außenflächen der beiden ersten Abschnitte jedes der Gelenke ($441_1$, $443_1$; $441_2$, $443_2$) jeweils koplanar zu gegenüberliegenden Außenflächen des festen und beweglichen Massivteils (1, 2).

7. Beschleunigungsmeßfühler nach einem beliebigen der Ansprüche 1 bis 6, dadurch **gekenn-**

zeichnet, daß die Plattenlängsseite, die die Elektroden ($34_1$, $34_2$) trägt, koplanar zur einen (F1) der Außenflächen des festen Teils (1) ist.

8. Beschleunigungsmeßfühler nach Anspruch 7, **gekennzeichnet** durch eine Querschnittsbreite (13) der Platten ($3_1$, $3_2$), senkrecht zu den Längsseiten der Platten genommen, gleich der Dicke (e4) der ersten Abschnitte ($441_1$, $443_1$; $441_2$, $443_2$) der Gelenke.

9. Beschleunigungsmeßfühler nach einem beliebigen der Ansprüche 1 bis 8, dadurch **gekennzeichnet,** daß ein Längsteil der Platte ($3_1$) einerseits ein Leitungsband ($341_1$; $342_2$; $344_1$) der ersten Elektrode ($34_1$; $34_2$), überlappend mit einer etwa in der Mitte gelegenen Längsachse der Seite, und andererseits ein seitliches Leitungsband ($341_2$ oder $343_2$; $343_1$ oder $342_1$; $344_2$ oder $345_2$) der zweiten Elektrode ($34_2$; $34_1$) trägt, das sich nahe der einen der Längskanten der Seite erstreckt.

10. Beschleunigungsmeßfühler nach Anspruch 9, dadurch **gekennzeichnet,** daß der Längsteil der Platte ($3_1$) ein zweites seitliches Leitungsband ($343_2$ oder $341_2$; $342_1$ oder $343_1$; $345_2$ oder $344_2$) trägt, das sich symmetrisch zum ersten seitlichen Band in bezug auf die in der Mitte gelegene Längsachse der Seite erstreckt und zur zweiten Elektrode gehört.

11. Beschleunigungsmeßfühler nach Anspruch 9 oder 10, dadurch **gekennzeichnet,** daß der Längsteil der Platte ($3_1$) wenigstens das eine der beiden an die Massivteile (1, 2) angrenzenden Längsviertel (L3/4) umfaßt.

12. Beschleunigungsmeßfühler nach Anspruch 9 oder 10, dadurch **gekennzeichnet,** daß der Längsteil der Platte ($3_1$) etwa die zentrale Hälfte (L3/2) umfaßt.

13. Beschleunigungsmeßfühler nach Anspruch 11, dadurch **gekennzeichnet,** daß die erste Elektrode ($34_1$) wenigstens ein von dem zentralen Teil der Seite getragenes seitliches Band ($342_1$, $343_1$) umfaßt, das sich nahe der einen der Längskanten der Seite erstreckt und mit dem ersten Elektrodenband ($341_1$, $344_1$) verbunden ist, die mit der Längsachse überlappt und die durch wenigstens das eine der beiden an die Massivteile angrenzenden Längsviertel getragen ist, und die zweite Elektrode ein durch den zentralen Teil der Seite getragenes Leitungsband ($342_2$) umfaßt, das die Längsachse überlappt und mit wenigstens dem seitlichen Band der zweiten Elektrode ($341_2$ oder

$343_2$; $344_2$ oder $345_2$) verbunden ist, das durch wenigstens das eine der beiden an die Massivteile angrenzenden Längsviertel getragen ist.

14. Beschleunigungsmeßfühler nach einem beliebigen der Ansprüche 9 bis 13, dadurch **gekennzeichnet,** daß die Elektroden ($34_1$, $34_2$) auf übereinander angeordneten Lagen einer mehrlagigen Struktur sind, die von der Seite der Platte getragen ist.

15. Beschleunigungsmeßfühler nach einem beliebigen der Ansprüche 9 bis 14, dadurch **gekennzeichnet,** daß jede Elektrode ein Leitungsband aufweist, das mit einem Elektrodenkontaktbereich ($33_1$, $33_2$), getragen von einer Außenfläche (F1) des festen Teils (1) verbunden ist.

16. Beschleunigungsmeßfühler nach einem beliebigen der Ansprüche 1 bis 15, dadurch **gekennzeichnet,** daß die Massivteile (1, 2) die Platten ($3_1$, $3_2$) und die Gelenke ($44_1$, $44_2$) einen monolithischen Körper bilden, der in der gleichen piezoelektrischen Materialplatte mit gleicher Dicke (E) maschinell bearbeitet ist.

17. Beschleunigungsmeßfühler nach den Ansprüchen 8 und 16, dadurch **gekennzeichnet,** daß die maschinelle Bearbeitung des Körpers chemisch ist und in einem einzigen Schritt mit derselben maschinellen Bearbeitungstiefe (P) ausgehend von den Außenflächen (F1, F2) der Platte ausgeführt wird.

18. Beschleunigungsmeßfühler nach einem beliebigen der Ansprüche 1 bis 17, dadurch **gekennzeichnet,** daß der feste Teil (1a) zwei Sätze umfaßt, die jeweils aus einem Zweig ($12a_1$; $12a_2$) zur Befestigung des Meßfühlers auf einem Befestigungsteil (BAa) und einem dünnen Teil ($11a_1$; $11a_2$) besteht, der den Zweig mit einer Basis (10a) des festen Teils verbindet, der fest mit den Platten ($3a_1$, $3a_2$) und den Gelenken ($44a_1$, $44a_2$) verbunden ist, um den Zweig und die Basis mechanisch zu entkoppeln.

19. Beschleunigungsmeßfühler nach Anspruch 18, dadurch **gekennzeichnet,** daß die Sätze mit Zweig und dünnem Teil ($12a_1$, $11a_1$; $12a_2$, $11a_2$) von den Gelenken ($44a_1$; $44a_2$) und dem beweglichen Teil (2a) durch Längsschlitze ($13a_1$, $13a_2$) getrennt sind.

20. Beschleunigungsmeßfühler nach Anspruch 18 oder 19, **gekennzeichnet** durch Paare von Kontaktbereichen ($33a_1$, $33a_2$), die jeweils auf

den gegenüberliegenden Außenflächen der Zweige ($12a_1$, $12a_2$) vorgesehen sind und mit den Elektrodenpaaren ($34a_1$, $34a_2$) der Platten ($3a_1$, $3a_2$) durch Bandleiterpaare ($38a_1$, $38a_2$) verbunden sind, die durch die dünnen Teile ($11a_1$; $11a_2$) und die Basis (10a) getragen sind.

*FIG.1*
(TECHNIQUE ANTERIEURE)

*FIG.2A*
(TECHNIQUE ANTERIEURE)

*FIG.2B*

# FIG.3

FIG.4

FIG.5

FIG.6A

FIG.6B

FIG.7A

FIG.7B

FIG.8A

FIG.8B

# FIG.9A

# FIG.9B

# FIG.10